# EUROPÄISCHE PATENTANMELDUNG

(11) **EP 1 035 376 A1**
(43) Veröffentlichungstag der Anmeldung: **13.09.2000**
(21) Anmeldenummer: 00101456.2
(22) Anmeldetag: 25.01.2000
(51) Int. Cl.: F23L 13/02, F23L 3/00, F16K 15/03, F16K 27/02

(54) **Rückstromklappe zur Verwendung in einer Gas-Brennwerttherme**

(30) Priorität: 10.03.1999 DE 19910644
(71) Anmelder: Wolf GmbH, 84048 Mainburg (DE)
(72) Erfinder: Schwalme, Jürgen, 84048 Mainburg (DE)
(74) Vertreter: Popp, Eugen, Dr.

(57) **Zusammenfassung**

Die Erfindung betrifft eine Rückstromklappe (23) zur Verwendung in einer Gas-Brennwerttherme (1), die zwischen einem Gasgebläse (16) und einem Brenner (12) angeordnet ist und die verhindert, daß aus dem Brennerbereich aufsteigender Dampf und Abgas in die Gas-Luft-Förderstrecke entgegen der normalen Strömungsrichtung einströmen kann. Die Rückstromklappe (23) ist als Kunststoff-Spritzgußteil, in bevorzugter Weise aus einem formbeständigen Thermoplast-Material hergestellt entsprechend einer Dichte von kleiner als 5,0g/cm³, so daß die Klappe extrem leicht ist und für eine Therme mit einer Leistung von kleiner als 30kW verwendet werden kann. Die Rückstromklappe ist ferner mit einem besonders ebenen Dichtflächenbereich (24) ausgestattet, so daß ohne Verwendung von irgendwelchen zusätzlichen Dichtmitteln eine hohe Dichtwirkung erzielt werden kann.

## Beschreibung

Die Erfindung betrifft eine Rückstromklappe zur Verwendung in einer Gas-Brennwerttherme nach dem Anspruch 1.

Bei Gas-Brennwertthermen wird die Kondensationsenthalpie dafür genutzt, um den Wirkungsgrad zu erhöhen. Der im Abgasstrom enthaltene Wasserdampf kondensiert während des Betriebes an den Rippen eines Kondensationswärmetauschers. Ein großer Teil des Kondenswassers fließt über die vorgesehenen Wege in einen Siphon des Gerätes und wird gewöhnlich in die Kanalisation abgeführt. Ein kleiner Teil des Kondenswassers verbleibt jedoch im Wärmetauscher, wo es nach dem Abschalten des Brenners aufgrund der Restwärme, die in den Bauteilen der Therme steckt, wieder verdampft. Der größte Teil des entstehenden Dampfes entströmt der Gas-Brennwerttherme über das Abgassystem. Ein kleiner Teil des Dampfes strömt aber unter ungünstigen Bedingungen über die Leitung für die Zufuhr eines Gas-Luft-Brennstoffgemisches zurück in eine Gasgebläseeinrichtung.

Es sind bisher zwei Varianten bekannt, um das Rückströmen von Dampf aus Gas-Brennwertthermen zu verhindern. Gemäß einer ersten Variante ist eine Klappe bekannt, die aus Blech besteht und mit einer Silikondichtung versehen ist. Diese bekannte Lösung führt aber zu einem hohen Druckverlust aufgrund der Schwere des verwendeten VA-Blechs, ferner ist der Dichtwerkstoff nicht langzeitbeständig gegen das in Brennwertthermen auftretende Kondenswasser und Dampf. Weiterhin besteht auch die Gefahr, daß sich das Blech bei der Montage verbiegt. Eine ähnliche Lösung ist aus der DE 196 35 974 A bekannt, wobei bei dieser bekannten Klappe Gas und Luft in einem Mischsystem wirksam vermischt werden sollen.

Zum anderen ist aus einem Prospekt der Firma Kutzner und Weber eine elektrische Rückstromsicherung bekannt geworden, die motorisch arbeitet und mit elektrischen Schaltern eine Verriegelung der Brennwertthermen sicherstellt. Diese bekannte elektrische Rückstromsicherung ist aber sehr aufwendig und bedingt auch eine vergleichsweise komplizierte elektrische Schaltung.

Ferner ist aus der DE 197 29 047 C1 ein Lösungsvorschlag mit einem Schwebekörper oder einem Ball bekannt, die meistens in der Gas-Luft-Mischeinrichtung oder im Abgassystem angeordnet werden. Keine der beiden genannten Konstruktionen verhindert jedoch das Austreten von Dampf aus dem Brennraumgehäuse in das Gasgebläse.

Die der Erfindung zugrundeliegende Aufgabe besteht darin, eine Rückstromklappe zur Verwendung in einer Gas-Brennwerttherme zu schaffen, die besonders einfach aufgebaut und hergestellt werden kann und darüber hinaus ein sehr geringes Gewicht hat, um für Thermen mit einer vergleichsweise geringen Leistung ebenso eingesetzt werden zu können.

Diese Aufgabe wird erfindungsgemäß durch die im Anspruch 1 aufgeführten Merkmale gelöst.

Besonders vorteilhafte Ausgestaltungen und Weiterbildungen der Erfindung ergeben sich aus den Unteransprüchen.

Die Rückstromsicherung in Form der Rückstromklappe nach der Erfindung bietet den besonderen Vorteil, daß sie sich ohne großen Platzaufwand in eine bestehende Gas-Brennwerttherme integrieren läßt. Die Klappe inklusive der Aufnahme wird zweckmäßiger Weise in einen Krümmer aus Aluminium-Druckguß so zwischen das Gasgebläse und den Brenner eingebaut, daß zusätzliche Dichtungen entfallen können. Es muß nur die Dichtung verwendet werden, die ohnehin auch ohne Rückstromklappe zum Einsatz kommt. Die Aufnahme als auch die Rückstromklappe sind aus Kunststoff-Spritzguß hergestellt und können daher sehr kostengünstig gefertigt werden.

Der Druckverlust der Klappe darf bei maximaler Heizleistung nicht zu groß werden und auch bei minimaler Heizleistung nicht zu stark ansteigen, da sonst die Drehzahl des Gasgebläses bei der jeweiligen Heizleistung zu weit angehoben werden müßte. Die herkömmlichen Klappen führen insbesondere bei kleiner Heizleistung zu einem überproportionalen Anstieg des Druckverlustes.

Erfindungsgemäß wird dieser Nachteil dadurch beseitigt, daß die Klappe aus einem formbeständigen Thermoplast gespritzt wird, der aufgrund seiner niedrigen Dichte ein wesentlich niedrigeres Gewicht bei gleichzeitig höherer Stabilität besitzt als vergleichbare Klappen aus Edelstahlblech. Der Druckverlust bei den verschiedenen Heizleistungen wird damit wesentlich niedriger und damit auch die Geräuschemission durch niedrigere Gebläsedrehzahlen abgesenkt.

Eine besondere Schwierigkeit bei derartigen Rückstromklappen besteht darin, daß die Klappe im geschlossenen Zustand ausreichend dicht ist, um ein Rückströmen von Dampf und Abgas zu verhindern. Dies wurde bisher durch Dichtungen verhindert, die aber störungsanfällig und montageaufwendig sind. Eine ausreichende Lebensdauer ist nur durch teure Dichtungswerkstoffe gegeben. Außerdem wird für eine Dichtung meistens eine Klebung mit einer entsprechend aufwendigen Vorbehandlung der Klebeflächen notwendig.

Durch die vorliegende Erfindung kann jedoch ohne irgendeine zusätzliche Dichtung ausgekommen werden. Die Dichtung wird durch eine plane Klappe mit einer hohen Ebenheit und einem gegenüberliegenden Dichtbereich mit entsprechender Ebenheit eines Festlagers erreicht. Die Dichtbereich des Festlagers hat deshalb eine definierte Breite. Der Turbulenzgrad im entstehenden Spalt wird erhöht, indem die aufeinanderliegenden Flächen von Klappe und Festlager mit einer besonderen Struktur versehen werden. Dies kann beispielsweise einer Rauhigkeitsklasse nach VDE 3400 entsprechen oder einer spezifischen Formstruktur für Kunststoffoberflächen.

Weiterhin ist vorgesehen, die Dichtheit über eine umlaufende Kante oder umlaufenden Flansch auf der Klappe zu verbessern. Es bildet sich dadurch ein Labyrinth mit einem engen Spalt und einem hohen Druckverlust einer Leckströmung, durch den die Leckströmung weiter reduziert wird. Die umlaufende Kante oder der umlaufende Flansch kann im Inneren eines Strömungskanals oder außerhalb oder sowohl im Inneren des Strömungskanals als auch außerhalb desselben angeordnet sein.

Die Rückstromklappen werden im allgemeinen nicht auf einer senkrechten Linie über dem Schwerpunkt gelagert, sondern außerhalb des Schwerpunkts, damit auch bei niedrigen Gegendrücken noch eine ausreichend hohe Dichtkraft zur Verfügung steht. Weiterhin ist die Bohrung für die Lagerung der Rückstromklappe als Langloch ausgeführt, damit die Fertigungstoleranzen ausgeglichen werden und sich die Klappe mit einem gewissen Spiel auf die Dichtfläche anlegen kann. Bei den herkömmlichen Klappen ist die Mittelachse des Langlochs gewöhnlich senkrecht zur Klappenfläche angeordnet. Dies hat aber den Nachteil, daß in der Ruhelage die Klappe sich aufgrund der herrschenden Kräfte-Gleichgewichte an der Oberkante öffnet und sich ein Spalt ergibt, der zu einer Undichtigkeit der Klappe bei kleinen Drücken führt.

Gemäß der vorliegenden Erfindung wird das Langloch so angeordnet und ausgebildet, daß die Mittelachse des Langlochs senkrecht zur Linie zwischen dem Langloch-Mittelpunkt und dem Schwerpunkt der Klappe verläuft. Die Schwerkraft der Klappe wirkt damit senkrecht zur Langlochachse und es wird die Tangentialkraft am Langloch damit zu Null, es entsteht ferner kein Spalt an der Oberkante der Klappe und die Klappe ist damit auch bei kleinen Gegendrücken ausreichend dicht.

Im folgenden wird die Erfindung anhand von Ausführungsbeispielen unter Hinweis auf die Zeichnung näher erläutert. In der Zeichnung zeigen:
- Fig. 1: eine schematische Ansicht einer Gasbrennwerttherme, bei der die Erfindung realisierbar ist;
- Fig. 2: eine perspektivische auseinandergezogene Darstellung eines Einbausatzes einer Rückstromsicherung mit Merkmalen nach der Erfindung;
- Fig. 3: eine perspektivische Ansicht einer Rückstromsicherung im eingebauten Zustand mit Merkmalen nach der Erfindung;
- Fig. 4: eine perspektivische schematische Ansicht einer spezifischen Ausführungsform einer Rückstromklappe nach der Erfindung;
- Figuren 5 bis 7: jeweils eine vorteilhafte Ausführungsform der erfindungsgemäßen Rückstromklappe; und
- Fig. 8: eine schematische Ansicht einer Klappe mit Merkmalen nach der Erfindung.

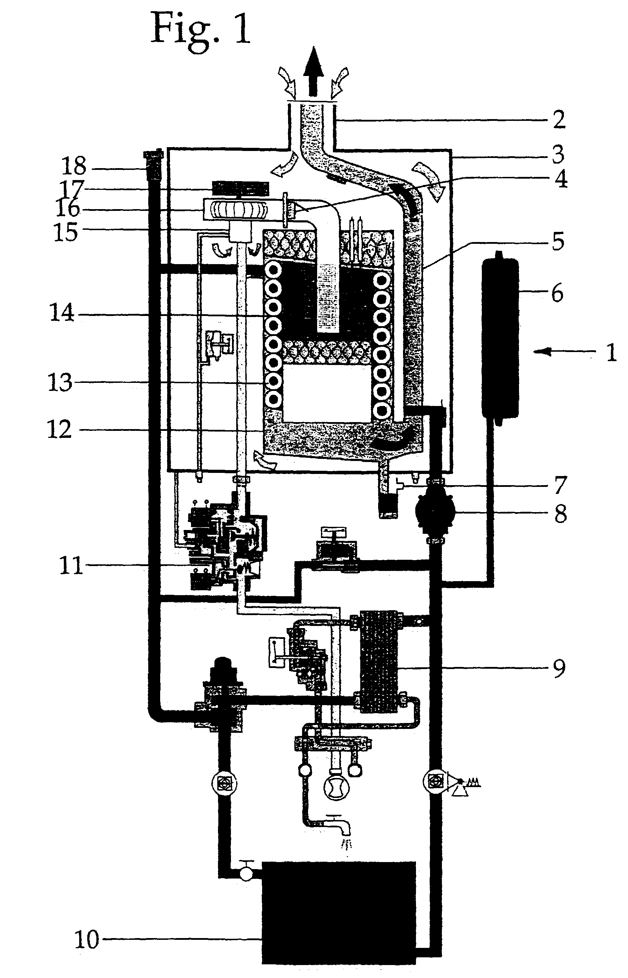

Die Rückstromklappe nach der vorliegenden Erfindung kann bei einer Gas-Brennwerttherme verwendet werden, die schematisch in Fig. 1 gezeigt ist. Die Brennwerttherme ist allgemein mit 1 bezeichnet und umfaßt einen Luft-/Abgasanschluß 2, ein Brennraumgehäuse 3, eine Rückstromklappe 4 nach der vorliegenden Erfindung, ein Abgasrohr 5, ein Druckausdehnungsgefäß 6, einen Kondenswassersiphon 7, eine Heizkreispumpe 8, einen Warmwasser-Wärmetauscher 9, einen Heizkörper 10, ein Gaskombiventil 11, eine Brennkammner 12, einen Heißwasser-Wärmetauscher 13, einen Brenner 14, eine Gas-/Luft-Mischkammer 15, ein Gasgebläse 16, einen Gebläsemotor 17 und einen Schnellentlüfter 18. Bei der gezeigten Brennwerttherme kondensiert der im Abgas enthaltene Wasserdampf während des Betriebes an den Rippen des Kondensationswärmetauschers 13. Ein großer Teil des Kondenswassers fließt über die vorgesehenen Wege in den Kondenswassersiphon 7 des Gerätes und wird in die Kanalisation abgeführt. Ein kleiner Teil des Kondenswassers verbleibt jedoch im Wärmetauscher 13, wo es nach dem Abschalten des Brenners aufgrund der Restwärme, die in den verschiedenen Bauteilen der Therme steckt, wieder verdampft. Der größte Teil des entstehenden Dampfes entströmt dabei der Gas-Brennwerttherme über das Abgassystem mit dem Abgasrohr 5. Ein kleiner Teil des sich bildenden Dampfes strömt aber über die Leitung für die Zufuhr des Gas-Luft-Brennstoffgemisches zurück in das Gasgebläse 16.

Durch die vorliegende Erfindung wird dieses Zurückströmen des Dampfes und Abgases wirksam verhindert.

Ferner können mehrere Gas-Brennwertthermen gemäß Fig. 1 an eine gemeinsame Abgassammelleitung (nicht gezeigt) angeschlossen sein. Eine elektrische Schaltung (nicht gezeigt) steuert dabei die Gas-Brennwertthermen unabhängig voneinander an den jeweiligen Wärmebedarf des betreffenden Gebäudes angepaßt. Es ist möglich, daß nur eine oder mehrere Gas-Brennwertthermen gleichzeitig in Betrieb sind. Die jeweils nicht laufenden Thermen werden über die gemeinsame Abgassammelleitung mit Abgas mit Überdruck beaufschlagt. Ohne eine Rückstromsicherung würde aber das Abgas über den Brenner und die äußere Umhausung in den Aufstellungsraum gedrückt werden. Die Luft im Aufstellungsraum würde sich mit CO₂ anreichern, was durch die vorliegende Erfindung ebenfalls wirksam verhindert werden kann.

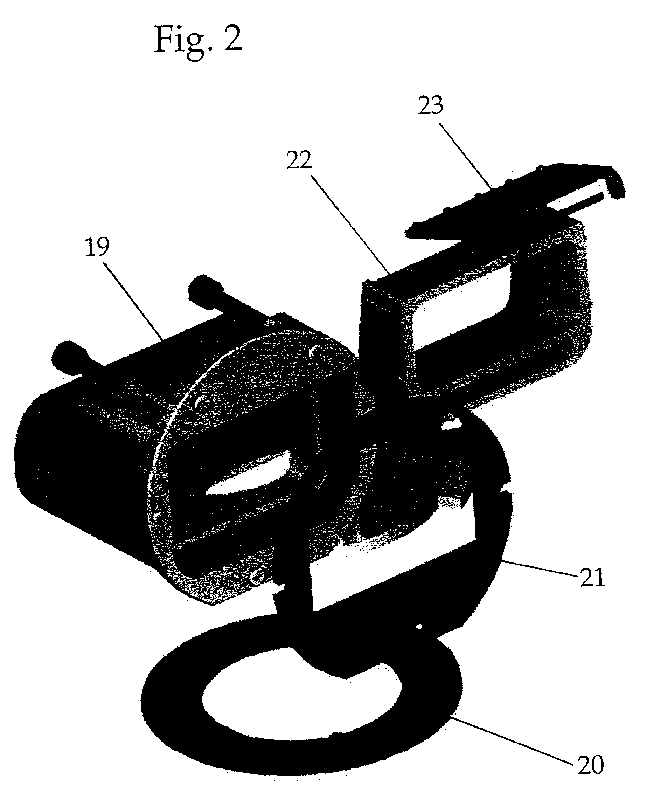

Fig. 2 zeigt in einer auseinandergezogenen Darstellung einen Einbausatz einer Rückstromsicherung, der sich ohne großen Platzaufwand in die bestehende Gas-Brennwerttherme integrieren läßt. die Klappe 23 inklusive der Aufnahme 22 wird in einen Krümmer 19 aus Aluminium-Druckguß so zwischen Gasgebläse und Brenner eingebaut, daß zusätzliche Dichtungen entfallen können. Es muß nur die Dichtung 20 verwendet werden, die jedoch ohnehin auch ohne Rückstromklappe zum Einsatz kommt. Die Aufnahme 22 und die Rückstromklappe 23 sind aus Kunststoff-Spritzguß hergestellt und können daher sehr kostengünstig gefertigt werden.

Zweckmäßigerweise wird die Klappe 23 aus einem formbeständigen Thermoplastmaterial spritztechnisch hergestellt, welches Material aufgrund seiner niedrigen Dichte ein wesentlich niedrigeres Gewicht bei gleichzeitig höherer Stabilität besitzt als vergleichbare Klappen aus Edelstahlblech.

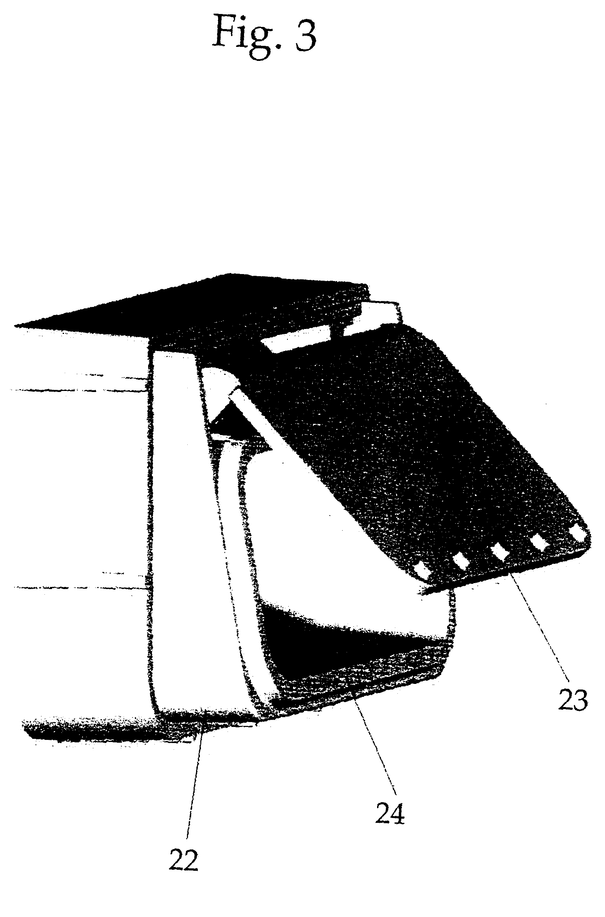

Fig. 3 zeigt die Klappe 23 mit der Aufnahme 22 in eingebautem Zustand.

Um eine gewünschte hohe Dichtwirkung zu erzielen, und zwar ohne Verwendung irgendwelcher zusätzlicher Dichtungsmittel wird die Klappe 23 eben ausgebildet und deren Dichtungsbereich wird mit einer besonderen Ebenheit ausgebildet, was auch für die Dichtkante 24 des Festlagers 22, die eine definierte Breite besitzt, gilt. Der Turbulenzgrad in einem entstehenden Spalt wird bei geschlossener Klappe 23 erhöht, indem die aufeinanderliegenden Dichtflächen von Klappe und Festlager beispielsweise mit einer besonderen Struktur versehen werden. Dies kann dadurch erfolgen, indem die betreffenden Dichtungsflächen mit einer Rauhigkeit gemäß einer Rauhigkeitsklasse von größer 33 nach VDI 3400 versehen werden oder die Kunststoffoberflächen mit einer speziellen Formstruktur ausgestattet werden.

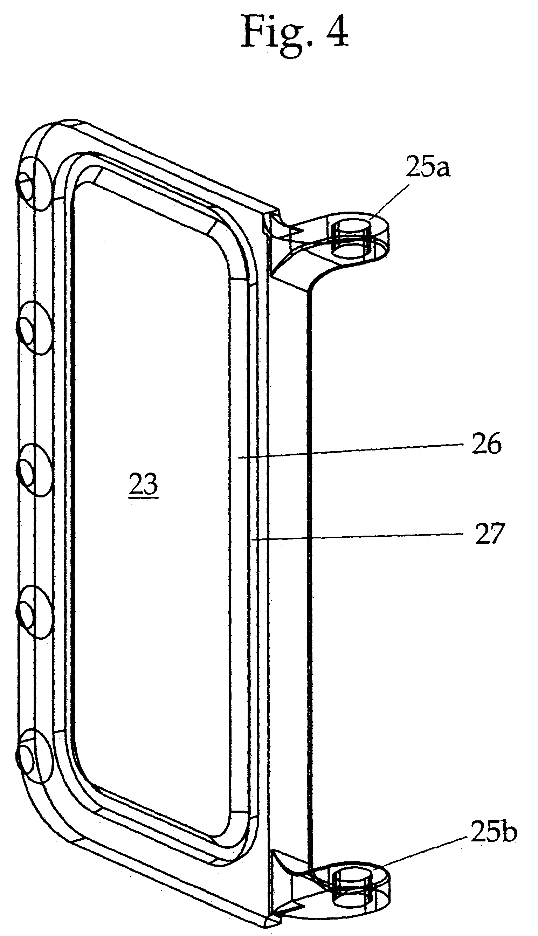

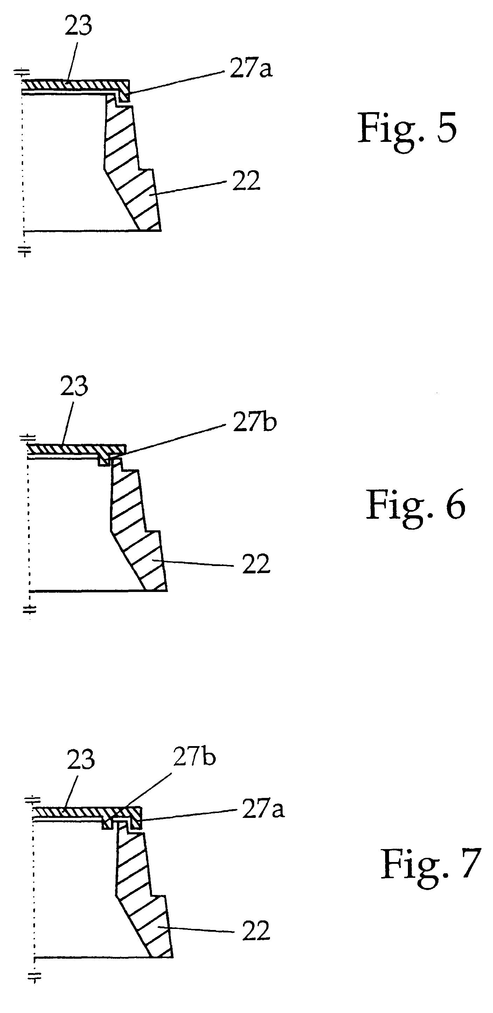

Um die Dichtwirkung weiter zu erhöhen, kann die Klappe 23 gemäß Fig. 4 mit einer umlaufenden Kante oder einem umlaufenden Flansch 26 ausgestattet werden. Dieser Flansch 26 kann gemäß den Ausführungsformen nach den Figuren 5 bis 7 entweder außerhalb eines Strömungskanals (Fig.5), innerhalb eines Strömungskanals (Fig.6) oder sowohl innerhalb als auch außerhalb eines Strömungskanals (Fig.7) ausgebildet sein. Die jeweiligen vorspringenden umlaufenden Kanten oder Flansche sind in den Figuren mit 27a, 27b bezeichnet. Der Flansch 26 besitzt ferner eine umlaufende außen liegende Fläche 27, die zusätzlich die Dichtwirkung erhöhen kann.

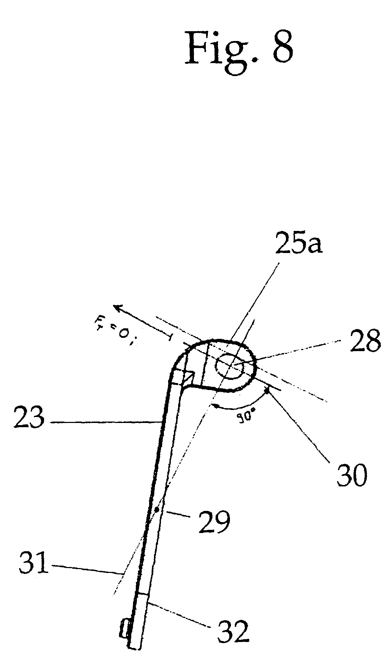

Gemäß Fig. 4 ist die Klappe mit aus der Ebene der Klappe vorspringenden Lagerösen 25a, 25b ausgestattet. Diese Lagerösen sind je mit einem Langloch ausgestattet, welches in Fig. 8 in Draufsicht gezeigt ist, wobei dieses Langloch einen Langloch-Mittelpunkt 28 besitzt. Durch das Vorsehen derartiger Langlöcher in den Lagerösen 25a,25b können Fertigungstoleranzen ausgeglichen werden.

Erfindungsgemäß ist das jeweilige Langloch so angeordnet, daß die Mittelachse 30 des Langlochs senkrecht zu einer Linie 31 zwischen dem Langloch-Mittelpunkt 28 und dem Schwerpunkt 29 der Klappe 23 verläuft. Die Schwerkraft der Klappe 23 wirkt damit senkrecht zur Langlochachse, die Tangentialkraft F_{T} am Langloch wird damit zu Null und es entsteht kein Spalt an der Oberkante der Klappe. Die Klappe wird damit auch bei kleinen Gegendrücken in ausreichender Weise dicht, so daß sie bei Brennwertthermen mit einer vergleichsweise niedrigen Leistung (z.B. 30KW) bevorzugt eingesetzt werden kann.

Da darüber hinaus sowohl die Klappe 23 als auch die Aufnahme 22 für die Klappe aus dem genannten Kunststoffmaterial hergestellt sind, führt die gesamte Konstruktion zu einem sehr kleinen Gewicht und die Klappe kann beispielsweise ein Gewicht von lediglich 5g haben, so daß sie auch bei vergleichsweise sehr kleinen Gegendrücken noch eine ausgezeichnete Dichtwirkung erzielt.

Für einen Fachmann sind eine Reihe von Änderungen an den gezeigten Ausführungsformen möglich, ohne jedoch dadurch den Rahmen der vorliegenden Erfindung zu verlassen. So besteht beispielsweise die Möglichkeit, insbesondere den Außenflächenbereich der Klappe 23 mit Verstärkungsrippen zu versehen, durch die die Formstabilität der Klappe und deren Steifigkeit erhöht werden.

## Patentansprüche

1. Rückstromklappe zur Verwendung in einer Gas-Brennwerttherme (1), die zwischen einem Gasgebläse (16) und einem Brenner (12) angeordnet ist, durch die ein Gas-Luft-Gemisch gefördert wird und die verhindert, daß aufsteigender Dampf und Abgas in die Gas-Luft-Förderstrecke entgegen der normalen Strömungsrichtung strömen kann,
**dadurch gekennzeichnet,**
daß die Rückstromklappe (23) als beweglich gelagertes, vorzugsweise aus einem formbeständigen Thermoplastmaterial hergestelltes Kunststoff-Spritzgußteil mit einer Dichte von kleiner als etwa 5,0 g/cm³, insbesondere 1,5 bis 2,0 g/cm³ ausgebildet ist.

2. Rückstromklappe nach Anspruch 1,
**dadurch gekennzeichnet,**
daß die Klappe (23) ein Gewicht von kleiner 5g für eine Therme mit einer Leistung von kleiner als 30 kW hat.

3. Rückstromklappe nach Anspruch 1 oder 2,
**dadurch gekennzeichnet,**
daß die Klappe (23) einen Dichtflächenbreich aufweist, der unmittelbar im Material der Klappe ohne zusätzliche Dichtmaterialien ausgebildet ist.

4. Rückstromklappe nach Anspruch 3,
**dadurch gekennzeichnet,**
daß der Dichtflächenbereich der vorzugsweise eben ausgebildeten Klappe (23) und ein Gegendichtflächenbereich (24) einer Klappen-Aufnahme (22) in einer besonderen Ebenheit ausgebildet sind.

5. Rückstromklappe nach Anspruch 3 oder 4,
**dadurch gekennzeichnet**,
daß der Dichtflächenbereich und/oder der Gegendichtflächenbereich (24) eine vorgegebene rauhe Oberflächenstruktur besitzen.

6. Rückstromklappe nach Anspruch 3 oder 4,
**dadurch gekennzeichnet,**
daß zusätzlich zum Dichtflächenbereich der Klappe (23) eine umlaufende Dichtkante (27a;27b) oder Dichtflansch mit einer vorgegebenen Breite an der Klappe (23) ausgebildet ist.

7. Rückstromklappe nach Anspruch 6,
**dadurch gekennzeichnet,**
daß die umlaufende Kante (27b) oder Flansch im Inneren eines Strömungskanals angeordnet ist.

8. Rückstromklappe nach Anspruch 6,
**dadurch gekennzeichnet**,
daß die umlaufende Kante (27a) oder Flansch außerhalb eines Strömungskanals angeordnet ist.

9. Rückstromklappe nach Anspruch 6,
**dadurch gekennzeichnet**,
daß die umlaufende Kante (27a,27b) oder Flansch innerhalb und außerhalb eines Strömungskanals angeordnet ist.

10. Rückstromklappe nach einem der Ansprüche 3 bis 5,
**dadurch gekennzeichnet**,
daß der Dichtflächenbereich der Klappe (23) an einer Fläche (27) einer von der Klappe vorspringenden umlaufenden Kante (26) oder eines umlaufenden Flansches ausgebildet ist.

11. Rückstromklappe nach einem der vorhergehenden Ansprüche,
**dadurch gekennzeichnet**,
daß die Klappe (23) mit aus der Ebene der Klappe vorspringenden Lagerösen (25a, 25b) versehen ist.

12. Rückstromklappe nach Anspruch 11,
**dadurch gekennzeichnet**,
daß in jeder der Lagerösen (25a, 25b) ein Langloch derart ausgebildet ist, daß die Mittelachse (30) des Langloches senkrecht zur einer Linie (31) zwischen dem Langloch-Mittelpunkt (28) und dem Schwerpunkt (29) der Klappe (23) verläuft.

13. Rückstromklappe nach einem der vorhergehenden Ansprüche,
**dadurch gekennzeichnet**,
daß die Klappe (23) inklusive der Klappen-Aufnahme (22) in einem Krümmer (19) zwischen Gasgebläse (16) und Brenner (14) eingebaut ist.

14. Rückstromklappe nach Anspruch 13,
**dadurch gekennzeichnet,**
daß die Klappen-Aufnahme (22) aus dem gleichen Kunststoffmaterial wie die Klappe (23) hergestellt ist.

15. Rückstromklappe nach Anspruch 13,
**dadurch gekennzeichnet,**
daß der Krümmer (19) aus Aluminium-Druckguß besteht.
